# FASCICULE DE BREVET EUROPEEN

(11) **EP 1 354 479 B1**
(45) Date de publication et mention de la délivrance du brevet: **08.08.2007**
(21) Numéro de dépôt: 02711963.5
(22) Date de dépôt: 15.01.2002
(51) Int. Cl.: H04N 7/24

(54) **PROCEDE ET EQUIPEMENT POUR LA GESTION DES INTERACTIONS DANS LA NORME MPEG-4**
VERFAHREN UND VORRICHTUNG ZUR VERWALTUNG VON INTERAKTIONEN IM STANDARD MPEG-4
METHOD AND EQUIPMENT FOR MANAGING INTERACTIONS IN THE MPEG-4 STANDARD

(30) Priorité: 15.01.2001 FR 0100486; 07.02.2001 FR 0101648
(43) Date de publication de la demande: 22.10.2003
(73) Titulaire: Groupe des Ecoles des Telecommunications, 75634 Paris Cedex 13 (FR); FRANCE TELECOM, 75015 Paris (FR)
(72) Inventeur: DUFOURD, Jean-Claude, F-94270 Le Kremlin-Bicêtre (FR); CONCOLATO, Cyril, F-94250 Gentilly (FR); PRETEUX, Françoise, F-75013 Paris (FR); PREDA, Marius, F-91000 Evry (FR)
(74) Mandataire: Breese, Pierre
(86) Numéro de dépôt international: PCT/FR2002/000145
(87) Numéro de publication internationale: WO 2002/056595

(56) Documents cités:
- EP-A- 0 996 290
- WO-A-00/00898
- WO-A-00/01154
- WO-A-00/68840
- WO-A-99/39272
- US-A- 6 092 107
- ISO/IEC JTC1/SC29/WG11: "Generic Coding of Audio-Visual Objects;Part 1: Systems; Section 9: Scene Description" INTERNATIONAL ORGANIZATION FOR STANDARDIZATION - ORGANISATION INTERNATIONALE DE NORMALISATION, XX, XX, 18 mai 1998 (1998-05-18), pages 40-150, XP002080753
- "MPEG-4 SYSTEMS" ISO/IEC JTC 1/SC29/WG11 N3725, XX, XX, octobre 2000 (2000-10), pages 1-134, XP000997365
- SIGNES J ET AL: "MPEG-4'S BINARY FORMAT FOR SCENE DESCRIPTION" SIGNAL PROCESSING. IMAGE COMMUNICATION, ELSEVIER SCIENCE PUBLISHERS, AMSTERDAM, NL, vol. 15, no. 4/5, janvier 2000 (2000-01), pages 321-345, XP000989994 ISSN: 0923-5965

## Description

La présente invention concerne la gestion des interactions multimédias effectuées par un ou des utilisateurs à partir de terminaux multimédias. Les interactions peuvent être aussi bien textuelles, vocales que gestuelles . Les interactions sont acquises à partir de n'importe quel dispositif d'entrée classique tel que souris, joystick, clavier, ou non-classique tel que systèmes de reconnaissance et de synthèse vocale ou interfaces de commandes par le regard et/ou le geste. Ces interactions multimédias sont traitées dans le contexte de la norme internationale MPEG-4.

### Contexte de l'invention

La norme MPEG-4 (ISO/IEC 14496) spécifie un système de communication pour les scènes audiovisuelles interactives. Conformément à la présente spécification, les utilisateurs ont la possibilité d'interagir avec la scène multimédia. Ces interactions utilisateurs peuvent être traitées localement côté client ou retransmises au serveur pour traitement.

La norme ISO/IEC 14496-1 (MPEG-4 Systems) définit le format binaire de description de scène (BIFS : BInary Format for Scene) qui concerne l'organisation des objets audiovisuels dans une scène. Les comportements des objets et leurs réponses aux interactions effectuées par les utilisateurs peuvent être représentés dans le format BIFS au moyen de sources et de cibles (routes) d'événements ainsi qu'à l'aide de capteurs (noeuds spéciaux capables de déclencher des événements). Les interactions côté client consistent en la modification des attributs des objets de la scène conformément aux actions spécifiées par les utilisateurs. Cependant, MPEG-4 Systems ne définit pas une interface utilisateur particulière ou un mécanisme qui associe l'interaction utilisateur avec des événements BIFS.

BIFS-Command est le sous-ensemble de la description BIFS qui permet de modifier des propriétés du graphe de la scène, de ses noeuds ou de ses comportements. BIFS-Command est donc utilisé pour modifier un ensemble de propriétés de la scène à un instant donné. Les commandes sont regroupées dans des CommandFrames afin de permettre l'envoi de plusieurs commandes dans une seule unité d'accès (Access Unit). Les quatre commandes de base sont les suivantes : remplacement d'une scène entière, et insertion, effacement ou remplacement des structures noeud, entrée d'événements (eventIn), exposedField, valeur indexée dans un MFField ou route. L'identification d'un noeud dans la scène est fournie par un nodeID. L'identification des champs d'un noeud est fournie par le INid du champ.

BIFS-Anim est le sous-ensemble de la description BIFS qui concerne la mise à jour continue de certains champs de noeuds dans le graphe de la scène. BIFS-Anim est utilisé pour intégrer différents types d'animation, y compris l'animation de modèles de visage, de corps humain, de maillages, ainsi que divers types d'attributs tels que positions bidimensionnelles et tridimensionnelles, rotations, facteurs d'échelle ou information colorimétrique. BIFS-Anim spécifie un flux ainsi que les procédures de codage et de décodage pour animer certains noeuds de la scène qui comportent des champs dynamiques particuliers. L'inconvénient majeur de BIFS-Anim dans le cadre de la présente invention est le suivant : BIFS-Anim ne spécifie pas comment animer tous les champs susceptibles d'être mis à jour de tous les noeuds d'une scène. En outre, BIFS-Anim utilise un masque d'animation qui fait partie des informations de configuration du décodeur. Le masque d'animation n'est pas modifiable par une interaction directe d'un utilisateur. Par conséquent, BIFS-Anim n'est pas adapté pour l'interaction utilisateur qui nécessite un niveau élevé de flexibilité et la possibilité de faire évoluer dynamiquement les noeuds de la scène à modifier.

MPEG-J est un système de programmation qui spécifie les interfaces pour garantir l'interopérabilité d'un diffuseur de média MPEG-4 avec du code Java. Le code Java arrive au niveau du terminal MPEG-4 sous forme d'un flux élémentaire distinct. Ensuite, il est dirigé vers l'environnement d'exécution MPEG-J qui comprend une machine virtuelle Java à partir duquel le programme MPEG-J aura accès aux divers composants du diffuseur de média MPEG-4. L'interface de programmation SceneGraph fournit un mécanisme par lequel les applications MPEG-J accèdent à la scène utilisée pour la composition par le diffuseur de média BIFS et la manipulent. Il s'agit d'une interface de bas niveau, permettant à l'application MPEG-J de contrôler les événements de la scène et de modifier l'arborescence de la scène par programme. Des noeuds peuvent également être créés et manipulés, mais seuls les champs des noeuds pour lesquels une identification de noeud a été définie sont accessibles à l'application MPEG-J. De plus, une mise en oeuvre de MPEG-J requiert des ressources trop importantes pour de nombreuses applications, notamment quand il s'agit de dispositifs portables de petite taille et de décodeurs. Ainsi, MPEG-J n'est pas approprié à la définition de procédures d'interaction utilisateur disponibles sur les terminaux présentant des capacités limitées.

L'analyse de l'état de l'art présentée ci-dessus décrit et examine brièvement les principaux procédés qui pourraient être utilisés pour gérer les interactions des utilisateurs de multimédia. Il reste à compléter par les aspects relatifs aux architectures de gestion d'interaction actuelles. Jusqu'à présent, il n'existe que deux manières d'aborder l'interaction. Premièrement, dans le cadre MPEG-4 et uniquement pour des interactions de type pointeur, le dispositif de composition est chargé de transcoder les événements provenant des utilisateurs en action de modification de la scène. Deuxièmement, hors du contexte normatif MPEG-4, toutes les interactions autres que celles de type pointeur doivent être mises en oeuvre dans une application spécifique. En conséquence, l'interopérabilité est perdue. Les deux options précédemment décrites sont trop limitées pour appréhender dans sa généralité et sa généricité le concept d'interactivité multi-utilisateur qui devient le principal enjeu des systèmes de communication.

Le présent document propose des procédés et un système génériques pour gérer les interactions multimédias effectuées par un ou des utilisateurs depuis un terminal multimédia. Le système proposé est une extension des spécifications de la partie « Systèmes MPEG-4 ». Il spécifie comment associer les interactions mono- ou multi-utilisateurs avec des événements BIFS, en réutilisant l'architecture des Systèmes MPEG-4. Le système liée à l'invention est générique puisqu'il permet de traiter tous les types d'interactions mono- ou multi-utilisateurs à partir de dispositifs d'entrée aussi bien primitifs (souris, claviers) que complexes (nécessitant de prendre en compte 6 degrés de liberté ou mettant en oeuvre des systèmes de reconnaissance vocale). Par la simple réutilisation d'outils existants, ce système est utilisable dans toutes les situations, y compris celles ne pouvant supporter qu'un très faible niveau de complexité.

Dans l'état de la technique, on connaît le brevet WO0000898. Il concerne une interaction multi-utilisateur pour une communication multimédia qui consiste à générer un message sur un ordinateur utilisateur local, le message contenant des données média orientées objet (p. ex. un flux de données audio numériques ou un flux de données vidéo numériques ou les deux) et à transmettre le message à un ordinateur utilisateur à distance. L'ordinateur utilisateur local affiche une scène comprenant les données media orientées objet et partagée entre l'ordinateur utilisateur local et l'ordinateur utilisateur distant. Ce dernier construit le message à l'aide d'une sorte de gestionnaire de messages. L'interaction multi-utilisateur pour la communication multimédia est une extension de la Version 1 MPEG-4.

Un autre brevet PCT W09939272 concerne un système de communication interactive fondé sur MPEG-4, dans lequel des descripteurs de commande sont utilisés avec des noeuds d'acheminement de commande ou des voies d'acheminement de serveur dans la description de scène afin d'apporter un support à l'interactivité spécifique pour l'application. On peut aider à la sélection du contenu en indiquant la présentation dans des paramètres de commande, l'identifieur de commande indiquant que la commande est une commande de sélection de contenu. On peut créer une scène initiale comportant plusieurs images et un texte décrivant une présentation associée à une image. Un descripteur de sélection de contenu est associé à chaque image et au texte correspondant. Quand l'utilisateur clique sur une image, le client transmet la commande contenant la présentation sélectionnée et le serveur déclenche une nouvelle présentation. On peut mettre en application cette technique dans tout contexte d'application, de la même façon qu'on peut utiliser HTTP et CGI pour mettre en oeuvre toute fonctionnalité d'application fondée sur un serveur.

Dans le cadre de la nouvelle approche proposée de l'interaction multimédia mono- ou multi-utilisateurs, les données d'interaction générées par un dispositif d'entrée quelconque sont considérées comme des flux élémentaires MPEG-4. Il en résulte que des opérations similaires à celles appliquées à n'importe quel flux de données élémentaire, peuvent alors être mises en oeuvre, en utilisant directement la chaîne de décodage standard.

En conséquence, la présente invention propose d'utiliser un modèle similaire à celui présenté dans MPEG-4 afin de traiter les données d'interaction.

A cet effet, l'invention concerne selon son acception la plus générale un procédé pour la gestion des interactions entre des périphériques de commande et des applications multimédias exploitant la norme MPEG-4, lesdits périphériques de commande délivrant des signaux numériques fonction d'actions d'un ou plusieurs utilisateur(s), procédé caractérisé en ce qu'il comporte une étape de construction d'une séquence numérique présentant la forme d'un noeud BIFS [Binary Format for Scene au sens de la norme MPEG-4], ce noeud comprenant un ou des champs définissant le type et le nombre de données d'interaction à appliquer à des objets de la scène.

Selon un mode de mise en oeuvre préféré, ce noeud comprend un drapeau dont l'état permet ou interdit à une interaction d'être prise en compte par la scène.

Selon une variante, ledit noeud comporte une étape de signalisation de l'activité du dispositif associé.

Avantageusement, le procédé comporte un étape de désignation de la nature de l'action ou des actions à exercer sur un ou des objets de la scène par l'intermédiaire du ou des champs du noeud.

Selon un mode de mise en oeuvre préféré, le procédé comporte une étape de construction, à partir du ou des champs du noeud, d'une autre séquence numérique composée d'au moins une action à exercer sur la scène, et d'au moins un paramètre de ladite action, dont la valeur correspond à une variable délivrée par ledit périphérique.

Selon un mode de mise en oeuvre préféré, le procédé comporte une étape de transfert de ladite séquence numérique dans la mémoire de composition.

Selon un mode de mise en oeuvre préféré, le transfert de ladite séquence numérique utilise la chaîne de décodage des systèmes MPEG-4 pour introduire les informations d'interaction dans le dispositif de composition.

Selon un mode de mise en oeuvre particulier, l'étape de transfert de la séquence est réalisée sous le contrôle d'un flux comprenant au moins un descripteur de flux, lui-même transportant les informations nécessaires pour la configuration de la chaîne de décodage avec le décodeur approprié.

Selon une variante, l'étape de construction de ladite séquence est réalisée dans un décodeur doté de la même interface vers le dispositif de composition qu'un décodeur BIFS ordinaire pour exécuter les BIFS-Commands décodés sur la scène sans passer par un tampon de composition.

Selon une variante, le noeud BIFS réalisant la première étape de construction comporte un nombre de champs variable, dépendant du type de périphérique de commande utilisé, lesdits champs sont connectés aux champs des noeuds à modifier par des routes. Le décodeur d'interaction transfère alors les valeurs produites par le périphérique dans les champs de ce noeud BIFS, le mécanisme des routes se chargeant de propager ces valeurs aux champs cibles.

Selon un mode de mise en oeuvre particulier, le flux de données d'interaction mono- ou multi-utilisateurs passe par un client DMIF associé au dispositif qui génère les unités d'accès à placer dans la mémoire tampon de décodage liée au décodeur correspondant.

Selon un exemple spécifique, le flux d'interaction mono- ou multi-utilisateurs entre dans le décodeur correspondant, soit directement, soit à travers la mémoire tampon de décodage associée, raccourcissant ainsi le trajet suivi par le flux d'interaction utilisateur.

L'invention concerne également un équipement informatique comportant un calculateur pour l'exécution d'une application multimédia exploitant la norme MPEG-4 et au moins un périphérique pour la représentation d'une scène multimédia, ainsi qu'au moins un périphérique pour commande dit programme caractérisé en ce qu'il comporte en outre un circuit interface comprenant un circuit d'entrée pour recevoir les signaux d'un moyen de commande et un circuit de sortie pour délivrer une séquence numérique, et un moyen pour la construction d'une séquence de sortie en fonction des signaux fournis par le périphérique d'entrée, conformément au procédé susvisé.

L'invention sera mieux comprise à la lecture de la description qui suit, concernant un exemple non limitatif de réalisation, se référant aux dessins annexés, où :
- la figure 1 représente l'organigramme du modèle de décodeur du système ;
- la figure 2 représente le flux de données d'interaction utilisateur.

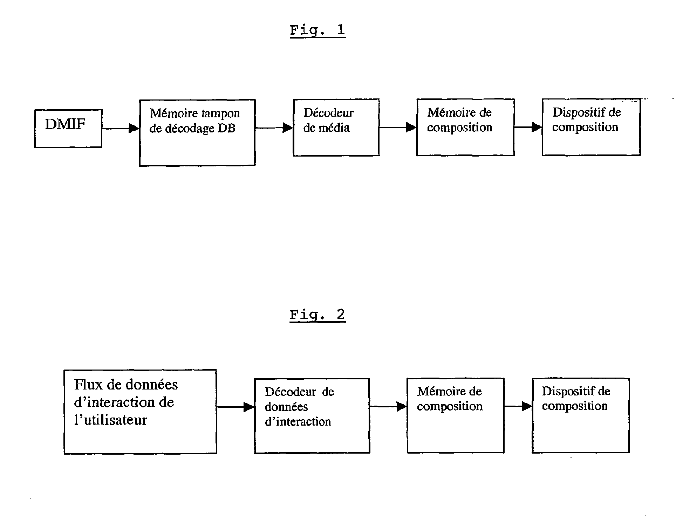

La figure 1 décrit le modèle standard. La figure 2 décrit le modèle dans lequel apparaissent deux concepts principaux : le décodeur d'interaction qui produit des unités de composition (CU) et le flux d'interaction utilisateur. Les données peuvent, soit provenir de la mémoire tampon de décodage placée dans une unité d'accès (AU), si l'accès au gestionnaire de dispositif d'entrée est effectué par l'intermédiaire de DMIF (Delivery Multimedia Integration Framework) de la norme MPEG-4, soit passer directement du dispositif d'entrée au décodeur lui-même, si la mise en oeuvre est telle que le décodeur et le gestionnaire de dispositif d'entrée sont placés dans le même composant. Dans ce dernier cas, la mémoire tampon de décodage est inutile.

Pour gérer l'interaction utilisateur, les éléments suivants sont nécessaires :
- un nouveau type de flux, prenant en compte les données d'interaction utilisateur (UI) ;
- un nouveau noeud unique BIFS pour spécifier l'association entre le flux d'interactions de l'utilisateur et les éléments de la scène et, également, pour autoriser ou interdire cette interaction ; et,
- un nouveau type de décodeur, pour interpréter les données provenant du dispositif d'entrée, ou peut-être de la mémoire tampon de décodage, et les transformer en modifications de scène. Ces modifications ont le même format que les BIFS-Commands. Autrement dit, la sortie du décodeur d'interaction est exactement équivalente à la sortie d'un décodeur BIFS.

Le nouveau type de flux, appelé flux d'interaction utilisateur (flux UI, voir tableau 1) est défini ici. Il est composé d'unités d'accès (AU) provenant d'un dispositif d'entrée (par exemple, une souris, un clavier, un gant instrumenté, ...). Afin d'être plus générique, la syntaxe d'une unité d'accès n'est pas définie ici. Elle pourrait être, sans y être limitée, identique à une autre unité d'accès provenant d'un autre flux élémentaire, si l'accès se fait par DMIF. Le type de flux spécifié ici comprend également le cas d'un dispositif local de création de média utilisé en tant que dispositif d'interaction. Ainsi, un dispositif local qui produit n'importe quel type d'objet défini par l'indication de type d'objet (Object Type Indication) de MPEG-4, tel qu'un objet visuel ou audio, est géré par la présente amélioration du modèle.

La syntaxe du nouveau noeud BIFS, appelé InputSensor, est la suivante :

| | | | |
|---|---|---|---|
| InputSensor { | | | |
| ExposedField | SFBool | Enabled | TRUE |
| ExposedField | SFCommandBuffer | InteractionBuffer | [] |
| Field | SFUrl | url | " " |
| EventOut | SFBool | IsActive | |
| } | | | |

Le champ "enabled" permet de contrôler si l'utilisateur souhaite ou non autoriser l'interaction qui provient des flux d'interaction utilisateur référencés dans le champ "url". Ce dernier spécifie le flux élémentaire à utiliser, comme décrit dans la plate-forme de description d'objet de la norme MPEG-4.

Le champ "interactionBuffer" est un SFCommandBuffer qui décrit ce que le décodeur doit faire du flux d'interaction spécifié dans "url". La syntaxe n'est pas obligatoire mais la sémantique de la mémoire tampon est décrite par l'exemple suivant :

| | |
|---|---|
| InputSensor { | |
| enabled | TRUE |
| interactionBuffer | ["REMPLACER N1.size","REMPLACER N2.size"," REMPLACER N3.size"] |
| url | "4" |
| } | |

Ce capteur récupère au moins trois paramètres provenant du dispositif d'entrée associé au descripteur d'objet 4 et remplace respectivement, le champ "size" des noeuds N1, N2 et N3 par les paramètres reçus.

Le rôle du décodeur d'interaction utilisateur est de transformer les unités d'accès reçues, soit en provenance de la mémoire tampon de décodage, soit directement du dispositif d'entrée. Il les transforme en unités de composition (CU) et les place dans la Mémoire de composition (CM), comme spécifié par la norme MPEG-4. Les unités de composition générées par le décodeur du flux d'interactions utilisateur sont des BIFS-Updates, plus spécifiquement les commandes REMPLACER, comme spécifié par MPEG-4 Systems. La syntaxe est strictement identique à celle définie par la norme MPEG-4 et déduite de la mémoire tampon d'interaction.

Par exemple, si le dispositif d'entrée a généré l'entier 3 et si la mémoire tampon d'interaction contient "REMPLACER N1.size", alors l'unité de composition sera le BIFS-Update décodé équivalente à "REMPLACER N1.size par 3"

Une des variantes mentionnées consiste à replacer le champ interactionBuffer du noeud InputSensor par un nombre de champs variable, dépendant du type de périphérique de commande utilisé, de type EventOut. Le rôle du décodeur d'interaction utilisateur est alors de modifier les valeurs de ces champs, charge à l'auteur de la présentation multimédia de créer des routes connectant les champs du noeud InputSensor aux champs cibles dans l'arbre de scène.

## Revendications

1. - Procédé pour la gestion dés interactions entre au moins un périphérique de commande et au moins une application multimédia exploitant la norme MPEG-4, ledit périphérique de commande délivrant des signaux fonction d'action d'un ou plusieurs utilisateurs, **caractérisé en ce qu'**il comporte une étape de construction d'une séquence numérique présentant la forme d'un noeud BIFS [Binary Format for Scene au sens de la norme MPEG-4], ledit noeud comprenant au moins un champ définissant le type et le nombre de données d'interaction à appliquer à des objets de la scène.

2. - Procédé pour la gestion des interactions entre un périphérique de commande et une application informatique exploitant la norme MPEG-4 selon la revendication 1 **caractérisé en ce que** le transfert de ladite séquence numérique utilise la chaîne de décodage des systèmes MPEG-4 pour introduire les informations d'interaction dans le dispositif de composition.

3. - Procédé pour la gestion, des interactions entre au moins un périphérique de commande et au moins une application multimédia exploitant la norme MPEG-4, selon la revendication 1 ou 2 **caractérisé en ce qu'**il comporte une étape de désignation de la nature de l'action ou des actions à exercer sur un ou des objets de la scène par l'intermédiaire du ou des champs du noeud.

4. - Procédé pour la gestion des interactions entre un périphérique de commande et une application informatique exploitant la norme MPEG-4 selon la revendication 1 ou 2 **caractérisé en ce que** le noeud BIFS comporte un nombre de champs variable, dépendant du type de périphérique de commande utilisé, et **en ce que** le transfert des données d'interaction des champs de ce noeud vers les champs cibles est faite au moyen de routes.

5. - Procédé pour la gestion des interactions entre un périphérique de commande et une supplication informatique exploitant la norme MPEG-4 selon la revendication 1 ou 2 **caractérisé en ce qu'**il comporte une étape de signalisation de l'activité du dispositif associé.

6. - Procédé pour la gestion des interactions entre un périphérique de commande et une application informatique exploitant la norme MPEG-4 selon l'une quelconque des revendications précédentes **caractérisé en ce que** l'étape de transfert de la séquence est réalisée sous la forme d'un flux signalé par un descripteur qui contient les informations nécessaires pour la configuration de la chaîne de décodage avec le décodeur approprié.

7. - Procédé pour la gestion des interactions entre un périphérique de commande et une application informatique exploitant la norme MPEG-4 selon l'une quelconque des revendications précédentes **caractérisé en ce que** l'étape de construction de la séquence des données d'interaction est réalisée dans une mémoire tampon de décodage du terminal d'exécution de l'application multimédia.

8. - Procédé pour la gestion des interactions entre un périphérique, de commande et une application informatique exploitant la norme MPEG-4 selon l'une quelconque des revendications 1 à 7 **caractérisé en ce que** l'étape de traduction de la séquence de données d'interaction est réalisée dans un décodeur doté d'une interface vers le dispositif de composition similaire à celle d'un décodeur BIFS ordinaire pour exécuter les BIFS-Commands décodés sur la scène.

9. - Procédé pour la gestion des interactions entre un périphérique de commande et une application informatique exploitant la norme MPEG-4 selon l'une quelconque des revendications précédentes **caractérisé en ce que** le flux d'interactions de l'utilisateur passe par un client DMIF associé au dispositif qui génère les unités d'accès à placer dans la mémoire tampon de décodage liée au décodeur correspondant.

10. - Procédé pour la gestion des interactions entre un périphérique de commande et une application informatique exploitant la norme MPEG-4 selon l'une quelconque des revendications précédentes **caractérisé en ce que** le flux d'interactions de l'utilisateur entre dans le décodeur correspondant, soit directement, soit à travers la mémoire tampon de décodage associée, raccourcissant ainsi le trajet suivi par le flux d'interactions de l'utilisateur.

11. - Equipement informatique comportant un calculateur pour l'exécution d'une application multimédia exploitant la norme MPEG-4 et au moins un périphérique pour la représentation d'une scène multimédia, ainsi qu'au moins un périphérique pour commande dit programme **caractérisé en ce qu'**il comporte en outre un circuit interface comprenant un circuit d'entrée pour recevoir les signaux d'un moyen de commande et un circuit de sortie pour délivrer une séquence de type BIFS, et un moyen pour la construction d'une séquence de sortie en fonction des signaux fournis par le périphérique d'entrée, conformément au procédé selon la revendication 1.

## Claims

1. Method for managing interactions between at least one control peripheral and at least one multimedia application using the MPEG-4 standard, said control peripheral delivering signals dependent on action from one or several users, **characterized in that** it comprises a step for constructing a digital sequence having the form of a BIFS [Binary Format for Scene, as used in the MPEG-4 standard] node, said node comprising at least one field defining the type and number of interaction data items to be applied to objects of the scene.

2. Method for managing interactions between a control peripheral and a computer application using the MPEG-4 standard, according to Claim 1, **characterized in that** the transfer of said digital sequence uses the decoding subsystem of the MPEG-4 systems to introduce the interaction information items into the composition device.

3. Method for managing interactions between at least one control peripheral and at least one multimedia application using the MPEG-4 standard, according to Claim 1 or 2, **characterized in that** it comprises a step for designating the nature of the action or actions to be applied to one or more objects of the scene via the field or fields of the node.

4. Method for managing interactions between a control peripheral and a computer application using the MPEG-4 standard, according to Claim 1 or 2, **characterized in that** the BIFS node comprises a variable number of fields, dependent on the type of control peripheral used, and **in that** the transfer of the interaction data items from the fields of this node to the target fields is done by means of routes.

5. Method for managing interactions between a control peripheral and a computer application using the MPEG-4 standard, according to Claim 1 or 2, **characterized in that** it comprises a step for signalling activity of the associated device.

6. Method for managing interactions between a control peripheral and a computer application using the MPEG-4 standard, according to any one of the preceding claims, **characterized in that** the step for transferring the sequence is performed in the form of a stream signalled by a descriptor which contains the information necessary to configure the decoding subsystem with the appropriate decoder.

7. Method for managing interactions between a control peripheral and a computer application using the MPEG-4 standard, according to any one of the preceding claims, **characterized in that** the step for constructing the sequence of interaction data items is performed in a decoding buffer memory of the terminal running the multimedia application.

8. Method for managing interactions between a control peripheral and a computer application using the MPEG-4 standard, according to any one of Claims 1 to 7, **characterized in that** the step for translating the sequence of interaction data items is performed in a decoder provided with an interface to the composition device similar to that of an ordinary BIFS decoder for executing the decoded BIFS-commands on the scene.

9. Method for managing interactions between a control peripheral and a computer application using the MPEG-4 standard, according to any one of the preceding claims, **characterized in that** the stream of user interactions passes through a DMIF client associated with the device which generates the access units to be placed in the decoding buffer memory linked to the corresponding decoder.

10. Method for managing interactions between a control peripheral and a computer application using the MPEG-4 standard, according to any one of the preceding claims, **characterized in that** the stream of user interactions enters into the corresponding decoder, either directly, or via the associated decoding buffer memory, so shortening the path followed by the stream of user interactions.

11. Computer equipment comprising a computer for running a multimedia application using the MPEG-4 standard and at least one peripheral for representing a multimedia scene, and at least one peripheral for controlling said program, **characterized in that** it also comprises an interface circuit comprising an input circuit for receiving the signals from a control means and an output circuit for delivering a BIFS-type sequence, and a means for constructing an output sequence according to signals supplied by the input peripheral, in accordance with the method according to Claim 1.

## Patentansprüche

1. Verfahren zur Verwaltung der Interaktionen zwischen mindestens einem peripheren Steuergerät und mindestens einer Multimedia-Anwendung mit Nutzung des MPEG-4-Standards, wobei das periphere Steuergerät Signale entsprechend der Aktion eines oder mehrerer Benutzer abgibt, **dadurch gekennzeichnet, dass** es eine Stufe der Bildung einer digitalen Folge aufweist, die die Form eines BIFS (Binary Format for Scene im Sinne des MPEG-4-Standards)-Knotens aufweist, wobei der Knoten mindestens ein Feld aufweist, das den Typ und die Anzahl der auf die Objekte der Szene anzuwendenden Interaktionsdaten festlegt.

2. Verfahren zur Verwaltung der Interaktionen zwischen einem peripheren Steuergerät und einer EDV-Anwendung mit Nutzung des MPEG-4-Standards nach Anspruch 1, **dadurch gekennzeichnet, dass** die Übertragung der digitalen Folge die Dekodierkette der MPEG-4-Systeme verwendet, um Interaktionsinformationen in die Kompositionsvorrichtung einzugeben.

3. Verfahren zur Verwaltung der Interaktionen zwischen mindestens einem peripheren Steuergerät und mindestens einer Multimedia-Anwendung mit Nutzung des MPEG-4-Standards nach Anspruch 1 oder 2, **dadurch gekennzeichnet, dass** es einen Schritt der Bezeichnung der Art der Aktion oder der Aktionen, die an einem oder mehreren Objekten der Szene über das Feld oder die Felder des Knotens ausgeführt werden sollen.

4. Verfahren zur Verwaltung der Interaktionen zwischen einem peripheren Steuergerät und einer EDV-Anwendung mit Nutzung des MPEG-4-Standards nach Anspruch 1 oder 2, **dadurch gekennzeichnet, dass** der BIFS-Knoten eine variable Anzahl von Feldern aufweist, die von der Art des verwendeten peripheren Steuergeräts abhängt, und dass die Übertragung der Interaktionsdaten von den Feldern dieses Knotens zu den Zielfeldern über Routen erfolgt.

5. Verfahren zur Verwaltung der Interaktionen zwischen einem peripheren Steuergerät und einer EDV-Anwendung mit Nutzung des MPEG-4-Standards nach Anspruch 1 oder 2, **dadurch gekennzeichnet, dass** es einen Schritt der Signalisierung der Tätigkeit der zugeordneten Vorrichtung aufweist.

6. Verfahren zur Verwaltung der Interaktionen zwischen einem peripheren Steuergerät und einer EDV-Anwendung mit Nutzung des MPEG-4-Standards nach einem der vorhergehenden Ansprüche, **dadurch gekennzeichnet, dass** der Schritt der Übertragung der Folge in Form eines Stroms erfolgt, der von einem Deskriptor, der die Informationen enthält, die für die Konfiguration der Dekodierungskette mit dem entsprechenden Dekodierer erforderlich sind, angezeigt wird.

7. Verfahren zur Verwaltung der Interaktionen zwischen einem peripheren Steuergerät und einer EDV-Anwendung mit Nutzung des MPEG-4-Standards nach einem der vorhergehenden Ansprüche, **dadurch gekennzeichnet, dass** der Schritt der Bildung der Folge der Interaktionsdaten in einem Pufferspeicher zur Dekodierung des Endgeräts zur Ausführung der Multimedia-Anwendung erfolgt.

8. Verfahren zur Verwaltung der Interaktionen zwischen einem peripheren Steuergerät und einer EDV-Anwendung mit Nutzung des MPEG-4-Standards nach einem der Ansprüche 1 bis 7, **dadurch gekennzeichnet, dass** der Schritt der Übersetzung der Folge der Interaktionsdaten in einem Dekodierer erfolgt, der mit einer Schnittstelle zu der Kompositionsvorrichtung versehen ist, die der eines üblichen BIFS-Dekodierers ähnelt, um die in der Szene dekodierten BIFS-Befehle auszuführen.

9. Verfahren zur Verwaltung der Interaktionen zwischen einem peripheren Steuergerät und einer EDV-Anwendung mit Nutzung des MPEG-4-Standards nach einem der vorhergehenden Ansprüche, **dadurch gekennzeichnet, dass** der Fluss der Interaktionen des Benutzers über einen DMIF-Client verläuft, der mit der Vorrichtung verbunden ist, die die Zugriffseinheiten erzeugt, die in dem Pufferspeicher zur Dekodierung, der mit dem entsprechenden Dekodierer verbunden ist, anzuordnen sind.

10. Verfahren zur Verwaltung der Interaktionen zwischen einem peripheren Steuergerät und einer EDV-Anwendung mit Nutzung des MPEG-4-Standards nach einem der vorhergehenden Ansprüche, **dadurch gekennzeichnet, dass** der Fluss der Interaktionen des Benutzers in den entsprechenden Dekodierer gelangt, entweder direkt oder über den verbundenen Pufferspeicher zur Dekodierung, wodurch sich der Weg des Flusses der Interaktionen des Benutzers verkürzt.

11. EDV-Ausrüstung, die einen Rechner zur Ausführung einer Multimedia-Anwendung mit Nutzung des MPEG-4-Standards und mindestens ein Peripheriegerät zur Darstellung einer Multimediaszene sowie mindestens ein Peripheriegerät zur Steuerung des Programms aufweist, **dadurch gekennzeichnet, dass** sie des Weiteren eine Schnittstellenleitung aufweist, die einen Eingang zum Empfangen der Signale eines Steuermittels und einen Ausgang zur Abgabe einer Folge vom Typ BIFS und ein Mittel zur Bildung einer Ausgangsfolge in Abhängigkeit von den Signalen, die vom Eingangsperipheriegerät gemäß dem Verfahren nach Anspruch 1 geliefert werden, aufweist.
